# FASCICULE DE BREVET EUROPEEN

(11) **EP 3 036 867 B1**
(45) Date de publication et mention de la délivrance du brevet: **26.02.2020**
(21) Numéro de dépôt: 14752817.8
(22) Date de dépôt: 12.08.2014
(51) Int. Cl.: H04L 12/28, H04N 7/16, H04N 21/258

(54) **PASSERELLE RÉSIDENTIELLE METTANT À DISPOSITION AU MOINS UN ESPACE MÉMOIRE PRIVÉ**
HEIMGATEWAY ZUR AKTIVIERUNG MINDESTENS EINES PRIVATEN SPEICHERRAUMS
RESIDENTIAL GATEWAY MAKING AT LEAST ONE PRIVATE MEMORY SPACE AVAILABLE

(30) Priorité: 22.08.2013 FR 1358115
(43) Date de publication de la demande: 29.06.2016
(73) Titulaire: SAGEMCOM BROADBAND SAS, 92500 Rueil Malmaison (FR)
(72) Inventeur: DANGY-CAYE, Nicolas, F-92500 Rueil Malmaison (FR); RABY, Florent, F-92500 Rueil Malmaison (FR)
(74) Mandataire: Cabinet Le Guen Maillet
(86) Numéro de dépôt international: PCT/EP2014/067275
(87) Numéro de publication internationale: WO 2015/024823

(56) Documents cités:
- US-A1- 2005 257 013
- US-A1- 2010 122 091
- US-A1- 2010 146 534
- MAREK LANDOWSKI ET AL: "AoE storage protocol over MPLS network", MASS STORAGE SYSTEMS AND TECHNOLOGIES (MSST), 2011 IEEE 27TH SYMPOSIUM ON, IEEE, 23 mai 2011 (2011-05-23), pages 1-5, XP031997548, DOI: 10.1109/MSST.2011.5937231 ISBN: 978-1-4577-0427-7

## Description

La présente invention concerne une passerelle résidentielle destinée à être connectée à un réseau de communication local et disposant d'un espace mémoire destiné à être mis à disposition d'au moins un dispositif connecté au réseau de communication local.

De nos jours, de nombreux dispositifs d'un réseau de communication résidentiel embarquent des disques durs (« Hard Disk Drive » en anglais). On trouve notamment des disques durs incorporés au sein de dispositifs décodeurs STB (« Set-Top Box » en anglais) et au sein de passerelles résidentielles (« residential gateway » en anglais). Un disque dur embarqué dans une passerelle résidentielle met typiquement en œuvre des fonctions de disque réseau NAS (« Networked Attached Storage » en anglais), offrant ainsi un espace mémoire public accessible à d'autres dispositifs connectés au réseau de communication résidentiel. Un disque dur embarqué dans un dispositif décodeur STB met typiquement en œuvre des fonctions d'enregistrement vidéo PVR (« Personal Video Recorder » en anglais) et/ou de contrôle du direct (« Time Shifting » en anglais), offrant ainsi un espace mémoire privé accessible uniquement aux internes du dispositif décodeur STB, afin d'éviter qu'un utilisateur ne récupère et ne mette à disposition via l'Internet tout contenu audiovisuel enregistré sur le disque dur.

Il est connu le document de brevet US 2010/146534 A1 dans lequel une passerelle résidentielle reçoit une demande d'authentification en provenance d'un dispositif décodeur « Set-Top Box ». La passerelle résidentielle récupère des données d'authentification stockées dans une mémoire interne, les données d'authentification étant associées audit dispositif décodeur. La passerelle résidentielle authentifie ledit dispositif décodeur en se basant, au moins partiellement, sur lesdites données d'authentification.

Il est souhaitable de permettre de mutualiser ces différentes utilisations d'espace mémoire au sein d'un même disque ou regroupement de disques, tout en respectant la contrainte d'accessibilité publique et privée inhérente à ces utilisations.

Il est en outre souhaitable de permettre une telle mutualisation, tout en respectant une contrainte de latence d'accès au disque dur dans le cadre d'enregistrements et de lectures de données audiovisuelles, comme c'est le cas dans la mise en œuvre de fonctions d'enregistrement vidéo PVR et de contrôle du direct.

Il est notamment souhaitable de fournir une solution qui soit simple à mettre en œuvre et à faible coût.

L'invention concerne une passerelle résidentielle destinée à être connectée à un réseau de communication local, la passerelle résidentielle disposant d'un espace mémoire destiné à être mis à disposition d'au moins un dispositif connecté au réseau de communication local. Ledit espace mémoire comportant au moins un espace mémoire privé, la passerelle résidentielle est telle qu'elle comporte : une table de gestion de droits d'accès au(x)dit(s) espace(s) mémoire privé(s) ; des moyens pour recevoir des commandes d'accès audit espace mémoire et des commandes administrateur de mise à jour de ladite table de gestion de droits d'accès ; des moyens pour mettre à jour ladite table de gestion de droits d'accès, sur réception d'une commande administrateur en provenance d'un dispositif prédéterminé mettant en œuvre un module administrateur, et pour ignorer toute commande administrateur en provenance d'un dispositif ne mettant pas en œuvre ledit module administrateur ; et des moyens pour ignorer toute commande d'accès au(x)dit(s) espace(s) mémoire privé(s), lorsque ladite commande est reçue en provenance d'un dispositif non identifié dans ladite table de gestion de droits d'accès. Ainsi, en implémentant une telle table de gestion de droits d'accès au(x)dit(s) espace(s) mémoire privé(s) et en assurant que seul le ou les module(s) administrateur(s) connu(s) de la passerelle résidentielle soi(en)t en mesure de modifier cette table, les règles d'accessibilité susmentionnées peuvent être respectées, tout en permettant de mutualiser la localisation des espaces mémoire dans le réseau de communication local. Cela permet notamment de permettre de déporter un disque dur habituellement incorporé à un dispositif décodeur STB vers la passerelle résidentielle. La passerelle résidentielle étant un dispositif destiné, par nature, à être allumé en permanence, le dispositif décodeur STB peut y accéder dès que besoin, et aucune problème de régulation énergétique ne se pose, ce qui n'aurait pas été le cas en déportant le disque dur de la passerelle résidentielle vers le dispositif décodeur STB.

Selon un mode de réalisation particulier, la passerelle résidentielle est adaptée pour recevoir, via le réseau de communication local, lesdites commandes d'accès audit espace mémoire sous forme de messages de couche liaison. Ainsi, la latence de transmission et de traitement de ces commandes est significativement réduite par rapport à des accès par messages de couche réseau ou transport du modèle OSI (« Open Systems Interconnection » en anglais). De plus, les traitements étant moindres, un processeur de plus faible performance peut être mis en œuvre dans la passerelle résidentielle.

Selon un mode de réalisation particulier, la passerelle résidentielle est adaptée pour recevoir, via le réseau de communication local, lesdites commandes d'accès audit espace mémoire sous forme de messages selon le protocole AoE (« ATA over Ethernet » en anglais, ATA étant l'acronyme de « Advanced Technology Attachment » en anglais). Ainsi, la mise en œuvre reste simple et compatible avec des dispositifs disponibles sur étagère (« off-the-shelf legacy devices » en anglais).

Selon un mode de réalisation particulier, la passerelle résidentielle comporte des moyens pour ignorer toute commande de type « Mac Mask List » concernant le(s)dit(s) espace(s) mémoire privé(s).

Selon un mode de réalisation particulier, la passerelle résidentielle comporte un serveur pour chaque espace mémoire privé, chaque serveur étant adapté pour filtrer et traiter les commandes d'accès audit espace mémoire privé, et des moyens pour diffuser un message de description de configuration de chaque serveur, ledit message incluant une description de l'espace mémoire privé géré par ledit serveur.

Selon un mode de réalisation particulier, l'espace mémoire comportant en outre au moins un espace mémoire public non pris en compte par la table de gestion de droits d'accès, la passerelle résidentielle comporte un serveur pour chaque espace mémoire public, la passerelle résidentielle comporte une file d'attente dans laquelle chaque serveur gérant un espace mémoire privé ou public place des commandes d'accès à l'espace mémoire à exécuter. Ainsi, la gestion des accès concurrents à un même medium est simplifiée.

Selon un mode de réalisation particulier, chaque serveur est associé avec un niveau de priorité et chaque commande d'accès à l'espace mémoire est placée dans la file d'attente en fonction du niveau de priorité associé au serveur fournissant ladite commande à exécuter. Ainsi, il est possible de favoriser certains accès par rapport à d'autres, pour mieux répondre à des contraintes de latence. Par exemple, il est ainsi possible d'exécuter en priorité des accès à l'espace mémoire pour des applications vidéo de type PVR ou contrôle du direct.

Selon un mode de réalisation particulier, lorsque la passerelle résidentielle n'est pas le dispositif implémentant le module administrateur, la passerelle résidentielle met en œuvre des moyens d'appairage de la passerelle résidentielle avec le dispositif implémentant le module administrateur. Ainsi, la configuration est simple.

Selon un mode de réalisation particulier, la passerelle comporte : des moyens de découverte de dispositifs connectés au réseau de communication local ; des moyens pour représenter les dispositifs découverts via une interface utilisateur ; des moyens pour permettre à un utilisateur de définir une association d'au moins un dispositif découvert avec chaque espace mémoire privé et avec des droits d'accès respectifs audit espace mémoire privé ; et des moyens pour générer au moins une commande administrateur pour mettre à jour la table de gestion de droits d'accès en fonction de l'association définie. Ainsi, la gestion des droits d'accès est simple.

L'invention concerne également un procédé mis en œuvre par une passerelle résidentielle connectée à un réseau de communication local, la passerelle résidentielle disposant d'un espace mémoire mis à disposition d'au moins un dispositif connecté au réseau de communication local. Le procédé est tel que, ledit espace mémoire comportant au moins un espace mémoire privé, la passerelle résidentielle comportant une table de gestion de droits d'accès au(x)dit(s) espace(s) mémoire privé(s), la passerelle résidentielle effectue les étapes suivantes : recevoir des commandes d'accès audit espace mémoire et des commandes administrateur de mise à jour de ladite table de gestion de droits d'accès ; mettre à jour ladite table de gestion de droits d'accès, sur réception d'une commande administrateur en provenance d'un dispositif prédéterminé mettant en œuvre un module administrateur, et ignorer toute commande administrateur en provenance d'un dispositif ne mettant pas en œuvre ledit module administrateur ; et ignorer toute commande d'accès au(x)dit(s) espace(s) mémoire privé(s), lorsque ladite commande est reçue en provenance d'un dispositif non identifié dans ladite table de gestion de droits d'accès.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un réseau de communication dans lequel la présente invention peut être implémentée ;
- la Fig. 2 illustre schématiquement un exemple d'architecture matérielle d'une passerelle résidentielle du réseau de communication ;
- la Fig. 3 illustre schématiquement un algorithme de mise à jour d'une table de gestion de droits d'accès à au moins un espace mémoire privé dans le cadre du réseau de communication ;
- la Fig. 4 illustre schématiquement un algorithme de déclaration, auprès de la passerelle résidentielle, d'un dispositif administrateur de ladite table de gestion de droits d'accès ;
- la Fig. 5 illustre schématiquement un algorithme de traitement de commandes reçues par la passerelle résidentielle dans le cadre d'une gestion d'accès à au moins un espace mémoire privé ;
- la Fig. 6 illustre schématiquement un algorithme de filtrage de commandes reçues par la passerelle résidentielle dans le cadre d'une gestion d'accès à au moins un espace mémoire privé.

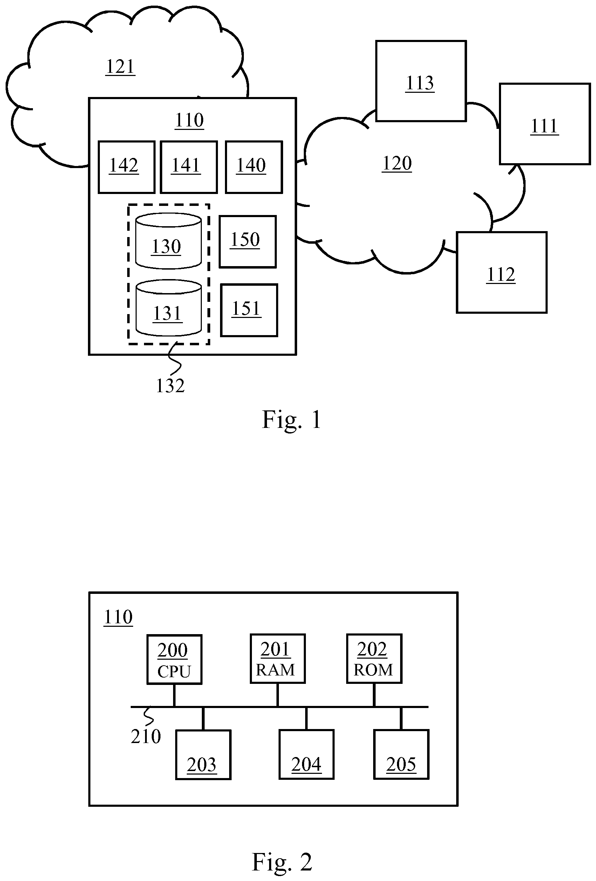

La Fig. 1 illustre schématiquement un réseau de communication local LAN (« Local Area Network » en anglais) 120 dans lequel la présente invention peut être implémentée. Le réseau de communication local 120 repose sur une architecture filaire, par exemple de type IEEE 802.3, et/ou sans-fil, par exemple de type IEEE 8023.11. Le réseau de communication local 120 comporte un ensemble de dispositifs 110, 111, 112, 113. Le dispositif 110 est une passerelle résidentielle interconnectant le réseau de communication local 120 et un réseau de communication étendu WAN 121 (« Wide Area Network » en anglais). Un exemple d'architecture matérielle de la passerelle résidentielle 110 est décrit ci-après en relation avec la Fig. 2.

Les dispositifs 111 et 112 sont des dispositifs fournisseurs et/ou consommateurs de données, préférentiellement de type audiovisuel. Par exemple, le dispositif 111 est un dispositif décodeur STB disposant d'une capacité d'enregistrement (« recording » en anglais) de données audiovisuelles, comme cela est le cas dans des fonctions de type PVR ou de contrôle du direct, le dispositif 112 est un dispositif de visualisation de type tablette électronique, et le dispositif 113 est un ordinateur PC (« Personal Computer » en anglais).

La passerelle résidentielle 110 comporte un espace mémoire 132, qui comporte au moins un espace mémoire privé 130, c'est-à-dire un espace mémoire dont les accès ne sont autorisés qu'à partir d'un dispositif préenregistré dans une table de gestion de droits d'accès. L'espace mémoire 132 peut comporter au moins un espace mémoire public 131, c'est-à-dire un espace mémoire dont les accès ne nécessitent pas un tel enregistrement préalable du dispositif dans la table de gestion de droits d'accès. En d'autres termes, la table de gestion de droits d'accès ne gère pas d'espace mémoire public. Les espaces mémoire publics 131 et privés 130 peuvent être localisés sur des médiums distincts ou être localisés sur des partitions distinctes d'un même médium. Par la suite, il est considéré à titre illustratif que la passerelle résidentielle 110 comporte au moins un espace mémoire privé 130 et au moins un espace mémoire public 131.

A chaque espace mémoire privé 130 est associé un serveur 150 adapté pour gérer les accès audit espace mémoire privé 130. De même, à chaque espace mémoire public 131 est associé un serveur 151 adapté pour gérer les accès audit espace mémoire public 131. En d'autres termes, les serveurs 150 et 151 sont adaptés pour traiter des commandes d'accès aux espaces mémoire 130 et 131 respectivement, en lecture et/ou en écriture, en provenance de dispositifs connectés au réseau de communication local 120. A la différence du serveur 151, le serveur 150 effectue un filtrage préalable des commandes en fonction du contenu de la table de gestion de droits d'accès. Chaque serveur 150 et 151 dispose d'un identifiant propre, qui lui est attribué par la passerelle résidentielle 110.

Dans un mode de réalisation particulier, chaque serveur 150 et 151 est adapté pour traiter des commandes selon un protocole d'échanges de données au niveau couche liaison (« Link Layer » en anglais) du modèle OSI. Les messages échangés via le réseau de communication local 120 dans le cadre des accès à l'espace mémoire 132 sont alors des messages de couche liaison, aussi appelés « *messages de niveau 2 ».* Cela permet de réduire significativement la latence de transmission et de traitement de ces messages, ce qui accélère la vitesse d'accès à l'espace mémoire 132. Dans un mode de réalisation particulier, ces messages de couche liaison sont conformes au protocole AoE. Cela permet à des dispositifs fournisseurs et/ou consommateurs de données, disponibles sur étagère (« off-the-shelf legacy devices » en anglais), de tirer bénéfice de la présente invention, tout en conservant une conception simple de la passerelle résidentielle 110.

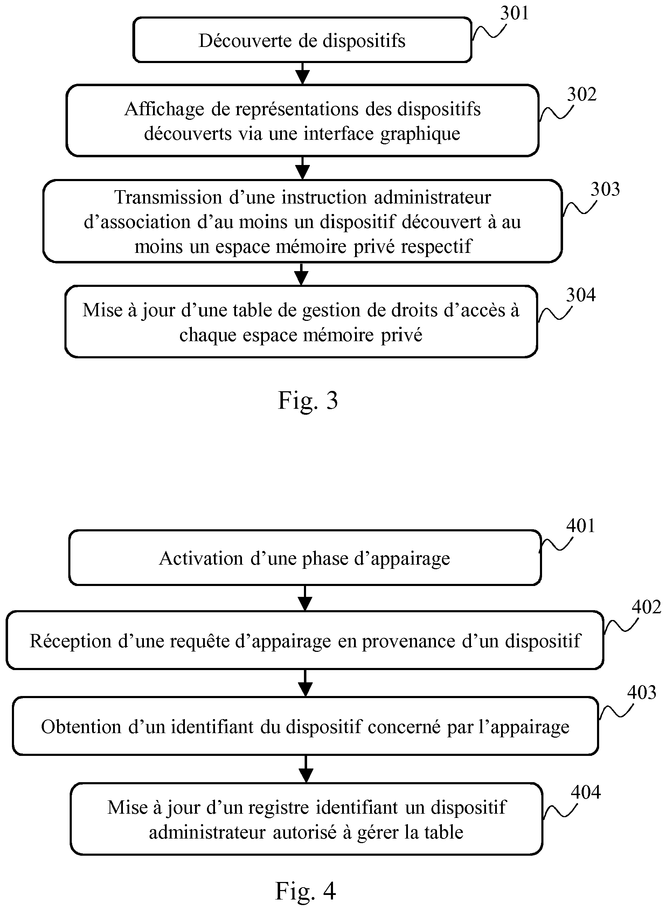

La passerelle résidentielle 110 comporte en outre une table 140 de gestion de droits d'accès à chaque espace mémoire privé 130. Un algorithme de mise à jour de la table 140 de gestion de droits d'accès est décrit ci-après en relation avec la Fig. 3.

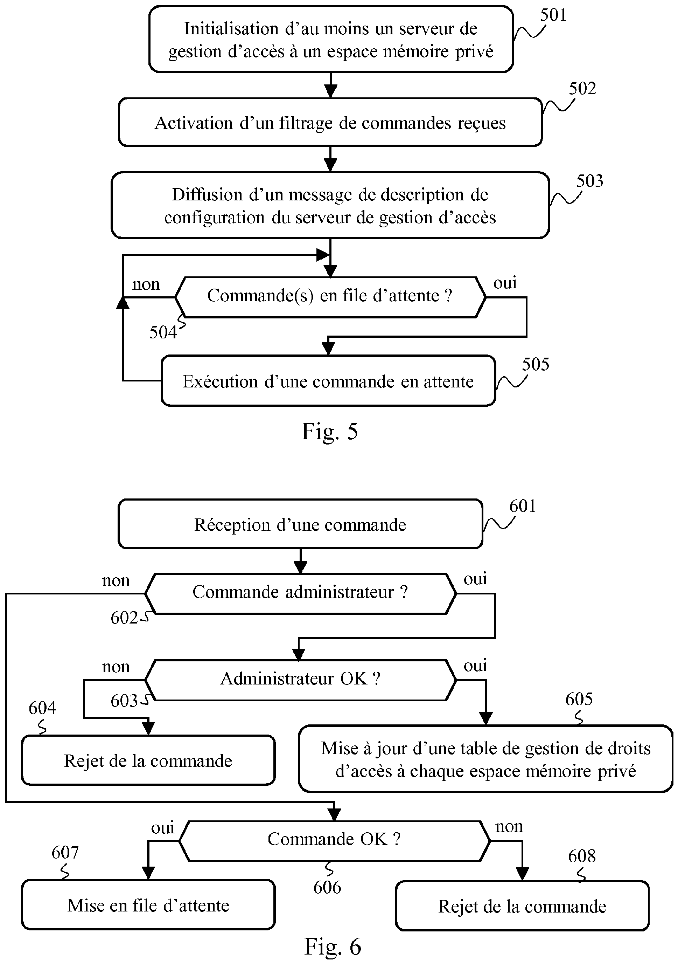

Comme détaillé par la suite, notamment en relation avec les Figs. 5 et 6, chaque serveur 150 en charge d'un espace mémoire privé 130 filtre les commandes à traiter en fonction du dispositif ayant généré la commande et en fonction des dispositifs et droits d'accès renseignés préalablement dans la table 140 de gestion de droits d'accès. La table 140 de gestion de droits d'accès est peuplée par un module, ou dispositif, administrateur 141. Sur la Fig. 1, un tel module administrateur 141 est inclus dans la passerelle résidentielle 110. Dans une variante de réalisation, le module administrateur 141 peut être inclus dans un autre dispositif connecté au réseau de communication local 120. Plusieurs modules administrateurs 141 peuvent permettre de peupler la table 140 de gestion de droits d'accès, dès lors que ces modules administrateurs 141 sont connus en tant que tels par la passerelle résidentielle 110.

Dans un mode de réalisation particulier, la passerelle résidentielle 110 comporte en outre un module 142 gestionnaire de priorité d'accès à l'espace mémoire 132. Ledit module 142 gestionnaire de priorité d'accès est en charge d'ordonnancer les commandes d'accès à l'espace mémoire 132 en provenance des serveurs 150 et 151. La gestion des priorités d'accès à l'espace mémoire 132 est réalisée grâce à une file d'attente dans laquelle les commandes en provenance des serveurs 150 et 151 sont placées. L'ordonnancement de ces commandes est assuré en fonction de niveaux de priorités affectés aux serveurs 150 et 151. L'ordonnancement de ces commandes peut en outre prendre en compte le type des dispositifs connectés au réseau de communication local 120 et ayant généré lesdites commandes, ainsi que le type desdites commandes.

La Fig. 2 illustre schématiquement un exemple d'architecture matérielle de la passerelle résidentielle 110. La passerelle résidentielle 110 comporte alors, reliés par un bus de communication 210 : un processeur ou CPU (« Central Processing Unit » en anglais) 200 ; une mémoire vive RAM (« Random Access Memory » en anglais) 201 ; une mémoire morte ROM (« Read Only Memory » en anglais) 202 ; au moins une unité de stockage 203, tel qu'un disque dur HDD (« Hard Disk Drive » en anglais), mettant en œuvre les espaces mémoire publics et privés déjà mentionnés ; un lecteur de support de stockage, tel qu'un lecteur de cartes SD (« Secure Digital » en anglais) 204 ; et un ensemble d'interfaces 214 permettant de communiquer via les réseaux de communication 120 et 121.

Le processeur 200 est capable d'exécuter des instructions chargées dans la RAM 201 à partir de la ROM 210, d'une mémoire externe (non représentée), d'un support de stockage, ou d'un réseau de communication. Lorsque la passerelle résidentielle 110 est mise sous tension, le processeur 200 est capable de lire de la RAM 201 des instructions et de les exécuter. Ces instructions forment un programme d'ordinateur causant la mise en œuvre, par le processeur 200, de tout ou partie des algorithmes et étapes décrits en relation avec la passerelle résidentielle 110.

Ainsi, tout ou partie des algorithmes et étapes décrits en relation avec la passerelle résidentielle 110 peut être implémenté sous forme logicielle par exécution d'un ensemble d'instructions par une machine programmable, telle qu'un DSP (« Digital Signal Processor » en anglais) ou un microcontrôleur. Tout ou partie des algorithmes et étapes décrits en relation avec la passerelle résidentielle 110 peut aussi être implémenté sous forme matérielle par une machine ou un composant dédié, tel qu'un FPGA (« Field-Programmable Gate Array » en anglais) ou un ASIC (« Application-Specific Integrated Circuit » en anglais).

La Fig. 3 illustre schématiquement un algorithme de mise à jour de la table 140 de gestion de droits d'accès.

Dans une étape 301, le module administrateur 141 obtient une liste d'identifiants des dispositifs connectés au réseau de communication local 120 et préférentiellement le type de ces dispositifs. Par exemple, cette liste est issue d'une phase de découverte selon le protocole SSDP (« Simple Service Discovery Protocol » en anglais) tel que mis en œuvre dans le cadre du standard UPnP (« Uni versai Plug and Play » en anglais).

Dans une étape 302 suivante, le module administrateur 141 assure un affichage, via une interface graphique GUI (« Graphical User Interface » en anglais) de représentations des dispositifs connectés au réseau de communication local 120. L'affichage permet à un utilisateur de sélectionner un dispositif parmi ceux connectés au réseau de communication local 120 et de définir des droits d'accès, en lecture et/ou en écriture, à au moins un espace mémoire privé 130. Dans un mode de réalisation particulier, le module administrateur 141 assure aussi un affichage d'une représentation de chaque espace mémoire privé 130 créé au sein de la passerelle résidentielle 110, et permet à un utilisateur de requérir que soit créé un nouvel espace mémoire privé 130 au sein de la passerelle résidentielle 110. Cela permet d'associer un dispositif parmi ceux connectés au réseau de communication local 120 à un espace mémoire privé et d'en définir les droits d'accès. Des informations permettant cette représentation de chaque nouvel espace mémoire privé 130 peuvent être requises par le module administrateur 141 auprès de la passerelle résidentielle 110.

Une telle interface graphique GUI permet en outre à l'utilisateur de supprimer ou de redéfinir des droits d'accès à chaque espace mémoire privé 130.

Dans une variante de réalisation, le module administrateur 141 négocie, avec les dispositifs connectés au réseau de communication local 120, les droits d'accès à chaque espace mémoire privé 130. Chacun de ces dispositifs peut inclure un jeu d'instructions spécifiques pour cette négociation, comme par exemple une application dans le cas où ledit dispositif est une tablette ou un téléphone intelligent (« smartphone » en anglais).

Dans une autre variante de réalisation, le module administrateur 141 utilise une définition préétablie des droits d'accès à chaque espace mémoire privé 130.

Dans une étape 303 suivante, le module administrateur 141 reçoit une information représentative d'une sélection faite par l'utilisateur d'un dispositif parmi ceux connectés au réseau de communication local 120 et une information représentative de droits d'accès associés audit dispositif sélectionné. Dans le mode de réalisation particulier évoqué ci-dessus en relation avec l'étape 302, le module administrateur 141 reçoit en outre une information représentative d'un espace mémoire privé concerné par lesdits droits accès, notamment lorsqu'il peut y avoir une ambiguïté concernant l'espace mémoire privé concerné. Le module administrateur 141 transmet alors à la passerelle résidentielle 110 une commande administrateur requérant que la passerelle résidentielle 110 mette à jour la table 140 de gestion de droits d'accès avec lesdites informations représentatives du dispositif sélectionné, de l'espace mémoire privé concerné (si ce n'est pas implicite) et des droits d'accès accordés audit dispositif sélectionné envers ledit espace mémoire privé.

Dans le mode de réalisation de la Fig. 1 où le module administrateur 141 est incorporé à la passerelle résidentielle 110, le module administrateur 141 n'échange pas d'informations avec la passerelle résidentielle 110 via le réseau de communication local 120 et agit directement auprès de la table 140 de gestion de droits d'accès.

Dans une étape 304 suivante, la passerelle résidentielle 110 met à jour la table 140 de gestion de droits d'accès d'après les informations d'association fournies par le module administrateur 141 à l'étape 303.

Préférentiellement, pour permettre des accès aux espaces mémoire privés en lecture et/ou écriture à latence réduite, un protocole d'échanges de données au niveau couche liaison (« Link Layer » en anglais) du modèle OSI (« Open Systems Interconnection » en anglais) est mis en œuvre. Dans ce cas, les adresses MAC (« Medium Access Control » en anglais) sont utilisées pour identifier les dispositifs dans la table 140 de gestion de droits d'accès.

De manière à assurer que seul le module administrateur 141 soit en mesure de requérir des mises à jour de la table 140 de gestion de droits d'accès, il est possible d'inscrire en mémoire non volatile de la passerelle résidentielle 110 un identifiant du dispositif implémentant le module administrateur 141, par exemple au moment de la fabrication de la passerelle résidentielle 110. Le dispositif implémentant le module administrateur 141 et la passerelle résidentielle 110 sont alors couplés en dur.

Dans un mode de réalisation préféré, la passerelle résidentielle 110 intègre le module administrateur 141.

Des méthodes d'authentification du dispositif implémentant le module administrateur 141 auprès de la passerelle résidentielle 110 peuvent aussi être mises en œuvre pour assurer de manière plus flexible que seul le module administrateur 141 soit en mesure de requérir des mises à jour de la table 140 de gestion de droits d'accès.

Selon encore une autre variante, un mécanisme d'appairage peut être mis en œuvre, tel que décrit ci-après en relation avec la Fig. 4.

La Fig. 4 illustre schématiquement un algorithme de déclaration, auprès de la passerelle résidentielle 110, d'un dispositif implémentant le module administrateur 141 au sein du réseau de communication local 120.

Dans une étape 401, la passerelle résidentielle 110 active une phase d'appairage. L'étape 401 peut être déclenchée suite à un événement prédéfini, comme par exemple une détection d'appui sur un bouton dédié d'un panneau de contrôle (physique, ou virtuel via une interface graphique GUI) de la passerelle résidentielle 110. La phase d'appairage peut être activée pour une durée prédéfinie ou jusqu'à ce qu'un dispositif ait réussi l'appairage avec la passerelle résidentielle 110, ou jusqu'à ce que la passerelle résidentielle 110 détecte un autre événement prédéfini, comme par exemple une nouvelle détection d'appui sur ledit bouton dédié.

Dans une étape 402 suivante, la passerelle résidentielle 110 reçoit une requête d'appairage en provenance d'un dispositif connecté au réseau de communication local 120. L'envoi de cette requête d'appairage par ledit dispositif peut être déclenché suite à un événement prédéfini, comme par exemple une détection d'appui sur un bouton dédié d'un panneau de contrôle (physique, ou virtuel via une interface graphique GUI) dudit dispositif. En d'autres termes, l'utilisateur après avoir appuyé sur un premier bouton dédié à l'appairage sur la passerelle résidentielle 110, appuie sur un second bouton dédié à l'appairage sur le dispositif implémentant le module administrateur 141.

Dans une étape 403 suivante, la passerelle résidentielle 110 obtient, à partir de la requête d'appairage reçue, un identifiant du dispositif ayant émis la requête d' appairage.

Dans une étape 404 suivante, la passerelle résidentielle 110 met à jour un registre interne dans lequel est stocké un identifiant du dispositif implémentant le module administrateur 141. Il est ensuite mis fin à la phase d'appairage. Seul le dispositif dont l'identifiant est stocké dans le registre est alors autorisé à requérir des mises à jour de la table 140 de gestion de droits d'accès au(x) espace(s) mémoire privé(s).

La Fig. 5 illustre schématiquement un algorithme de traitement de commandes reçues par la passerelle résidentielle 110 dans le cadre d'une gestion d'accès à l'espace mémoire 132.

Dans une étape 501, la passerelle résidentielle 110 initialise au moins un serveur 150 adapté pour gérer les accès à au moins un espace mémoire privé respectif 130 et au moins un serveur 151 adapté pour gérer les accès à au moins un espace mémoire public respectif 131.

Dans une étape 502 suivante, la passerelle résidentielle 110 active un filtrage de commandes reçues, en provenance de dispositifs connectés au réseau de communication local 120, et relatives à des accès à au moins un espace mémoire privé 130. Un tel filtrage est réalisé, comme décrit ci-après en relation avec la Fig. 6, par chaque serveur 150 gérant les accès à l'espace mémoire privé 130 correspondant.

Dans une étape 503 suivante, la passerelle résidentielle 110 diffuse via le réseau de communication local 120 au moins un message de description de configuration de chaque serveur 150 de gestion d'accès à un espace mémoire privé 130, de manière à signifier aux dispositifs connectés au réseau de communication local 120 que ledit serveur 150 est prêt à accepter des commandes. Chaque message de description de configuration d'un serveur 150 comporte une indication de l'espace mémoire privé 130 géré par ledit serveur 150, par exemple en fournissant une indication de secteurs mémoire constituant ledit espace mémoire privé 130. De plus, la passerelle résidentielle 110 diffuse via le réseau de communication local 120 au moins un message de description de configuration de chaque serveur 151 de gestion d'accès à un espace mémoire public 131, de manière à signifier aux dispositifs connectés au réseau de communication local 120 que ledit serveur 151 est prêt à accepter des commandes. Chaque message de description de configuration d'un serveur 151 comporte une indication de l'espace mémoire public 131 géré par ledit serveur 151, par exemple en fournissant une indication de secteurs mémoire constituant ledit espace mémoire public 131.

Dans le mode de réalisation particulier reposant sur le protocole AoE, de tels messages sont de type « Query Config Information Response ».

Dans une étape 504 suivante, la passerelle résidentielle 110 vérifie si au moins une commande d'accès à l'espace mémoire 132 est en attente de traitement dans la file d'attente déjà mentionnée. Les commandes sont placées dans la file d'attente par les serveurs 150 et 151. Si une commande d'accès est en attente dans la file d'attente, une étape 505 est effectuée ; sinon, l'étape 504 est répétée.

Dans l'étape 505, la passerelle résidentielle 110 récupère, de la file d'attente, une commande de lecture à partir d'un espace mémoire 130 ou 131, ou d'écriture dans un espace mémoire 130 ou 131, en attente de traitement. Puis, la passerelle résidentielle 110 traite la commande récupérée, c'est-à-dire effectue l'opération d'écriture dans l'espace mémoire concerné ou de lecture de l'espace mémoire concerné. Chaque commande étant associée dans la file d'attente à un identifiant du serveur 150 ou 151 ayant placé la commande dans la file d'attente, la passerelle résidentielle 110 est apte à fournir un résultat de l'opération d'écriture ou de lecture au serveur 150 ou 151 concerné.

Dans un mode de réalisation particulier, chaque commande placée dans la file d'attente est associée avec une indication de priorité. Dans ce cas, la passerelle résidentielle 110 traite en premier lieu les commandes de priorité supérieure dans la file d'attente et, lorsque plusieurs commandes sont de priorité supérieure, la passerelle résidentielle 110 traite en premier lieu la commande de priorité supérieure la plus ancienne dans la file d'attente. Il est alors possible de rendre plus prioritaires les accès aux espaces mémoire privés 150 par rapport aux accès aux espaces mémoire publics 151.

La Fig. 6 illustre schématiquement un algorithme de filtrage de commandes reçues par la passerelle résidentielle 110 dans le cadre d'une gestion d'accès à l'espace mémoire 132.

Dans une étape 601, la passerelle résidentielle 110 reçoit une commande d'accès à l'espace mémoire 132.

Dans une étape 602, la passerelle résidentielle 110 détermine de quel type est la commande reçue. Si la commande est une commande administrateur, c'est-à-dire une commande issue du dispositif implémentant le module administrateur 141, une étape 603 est effectuée ; sinon, si la commande concerne un espace mémoire public 131, la passerelle résidentielle 110 doit fournir la commande, pour traitement, au serveur 151 concerné, et si la commande concerne un espace mémoire privé 130, la passerelle résidentielle 110 doit fournir la commande, pour traitement, au serveur 150 concerné. Chaque commande d'écriture ou de lecture comporte une indication de l'espace mémoire 130 ou 131 concerné ou une indication d'une portion de l'espace mémoire 130 ou 131 concerné. Dans le mode de réalisation particulier déjà évoqué reposant sur le protocole AoE, les commandes d'écriture ou de lecture sont de type « Issue ATA Command », dans lesquelles les dispositifs ayant émis lesdites commandes indiquent quels secteurs mémoire sont concernés. De plus, comme décrit ci-dessous, des commandes de type « Mac Mask List » sont acceptées pour ce qui concerne les espaces mémoire publics 131, mais pas pour les espaces mémoire privés 130. En effet, de manière à ne pas divulguer de liste de dispositifs ayant droit d'accès à un espace mémoire privé 130 ni d'autoriser l'écriture d'une telle liste par des clients conformes au protocole AoE, le serveur 150 en charge dudit espace mémoire privé 130 ignore ce type de commandes.

Ainsi, dans une étape 606, le serveur concerné analyse la commande reçue pour déterminer si la commande peut être acceptée par la passerelle résidentielle 110.

Lorsque la commande est une commande d'accès à un espace mémoire public 131 et est par conséquent traitée par un serveur 151, ledit serveur 151 vérifie l'intégrité de la commande reçue et, en cas de vérification positive, place la commande dans la file d'attente dans une étape 607. Lorsque la commande placée en file d'attente est traitée par la passerelle résidentielle 110 à l'étape 505, le serveur 151 fournit une réponse au dispositif ayant émis la commande, un identifiant dudit dispositif étant contenu dans le message ayant transporté ladite commande via le réseau de communication local 120. Ainsi, lorsque la commande est une commande d'écriture, le serveur 151 génère en réponse à ladite commande un message représentatif de l'échec ou du succès de l'opération d'écriture associée dans l'espace mémoire public 131 concerné ; puis, il est mis fin à l'algorithme. Dans le cas où la commande a été reçue de manière corrompue ou lorsque la commande reçue comprend un champ ou un paramètre inapproprié, dans une étape 608, le serveur 151 génère en réponse à ladite commande un message représentatif d'une erreur dans la commande reçue ; puis, il est mis fin à l'algorithme.

Lorsque la commande est une commande de type « Mac Mask List » concernant un espace mémoire public 131, la passerelle résidentielle 110 passe la commande au serveur 151 concerné, qui la traite conformément au protocole AoE.

Lorsque la commande est une commande d'accès à un espace mémoire privé 130 et est par conséquent traitée par un serveur 150, ledit serveur 150 vérifie l'intégrité de la commande reçue et, en cas de vérification positive, vérifie si le dispositif ayant transmis la commande est autorisé à accéder audit espace mémoire privé 130. Pour ce faire, le serveur 150 consulte la table 140 de gestion de droits d'accès et vérifie si le dispositif ayant transmis la commande est identifié dans ladite table 140, et si les droits d'accès correspondants permettent de réaliser l'opération demandée. Lorsque le dispositif ayant transmis la commande est identifié dans la table 140 de gestion de droits d'accès et lorsque la commande reçue est en accord avec les droits d'accès qui lui sont associés pour ledit espace mémoire privé 130, alors le serveur 150 place la commande dans la file d'attente dans l'étape 607. Lorsque la commande placée en file d'attente est traitée par la passerelle résidentielle 110 à l'étape 505, le serveur 150 fournit une réponse au dispositif ayant émis la commande, un identifiant dudit dispositif étant contenu dans le message ayant transporté ladite commande via le réseau de communication local 120. Ainsi, lorsque la commande est une commande d'écriture, le serveur 150 génère en réponse à ladite commande un message représentatif de l'échec ou du succès de l'opération d'écriture associée dans l'espace mémoire privé 130 concerné ; puis, il est mis fin à l'algorithme. Dans le cas où la commande a été reçue de manière corrompue ou lorsque la commande reçue comprend un champ ou un paramètre inapproprié, ou lorsque la commande n'est pas en accord avec les droits d'accès définis dans la table 140 de gestion de droits d'accès, dans une étape 608, le serveur 150 génère en réponse à ladite commande un message représentatif d'une erreur dans la commande reçue ; puis, il est mis fin à l'algorithme.

Lorsque la commande est une commande de type « Mac Mask List » concernant un espace mémoire privé 130, et que cette commande n'est pas une commande administrateur, la passerelle résidentielle 110 ignore ladite commande.

Lorsqu'un serveur 150 ou 151 place une commande dans la file d'attente, ledit serveur 150 ou 151 associe à ladite commande l'identifiant dudit serveur 150 ou 151, afin de permettre à la passerelle résidentielle 110 de faire ultérieurement le lien entre chaque commande traitée et le serveur 150 ou 151 concerné.

Comme déjà évoqué, chaque commande en file d'attente peut être associée à un niveau de priorité. Chaque commande est alors placée dans la file d'attente en fonction du niveau de priorité associé au serveur fournissant ladite commande.

Dans l'étape 603, la passerelle résidentielle 110 traite la commande administrateur reçue. La commande est donc une commande en provenance du dispositif implémentant le module administrateur 141. Dans le mode de réalisation particulier selon le protocole AoE, la commande est de type « Mac Mask List ». La commande peut concerner l'ajout, vis-à-vis d'un espace mémoire privé 130, d'un dispositif du réseau de communication local 120 dans la table 140 et des droits d'accès associés à ce dispositif vis-à-vis dudit espace mémoire privé 130. La commande peut concerner la modification des droits d'accès d'un dispositif du réseau de communication local 120 dans la table 140 vis-à-vis d'un espace mémoire privé 130. La commande peut concerner la suppression des droits d'accès d'un dispositif du réseau de communication local 120 dans la table 140 vis-à-vis d'un espace mémoire privé 130. Il est ensuite mis fin à l'algorithme.

## Revendications

1. Passerelle résidentielle (110) destinée à être connectée à un réseau de communication local (120), la passerelle résidentielle disposant d'un espace mémoire (132) destiné à être mis à disposition d'au moins un dispositif (111 ; 112) connecté au réseau de communication local, **caractérisée en ce que**, ledit espace mémoire comportant au moins un espace mémoire privé (130), la passerelle résidentielle comporte :
- une table (140) de gestion de droits d'accès au(x)dit(s) espace(s) mémoire privé(s) ;
- des moyens pour recevoir des commandes d'accès audit espace mémoire et des commandes administrateur de mise à jour de ladite table de gestion de droits d'accès ;
- des moyens pour mettre à jour ladite table de gestion de droits d'accès, sur réception d'une commande administrateur en provenance d'un dispositif prédéterminé mettant en œuvre un module administrateur, et pour ignorer toute commande administrateur en provenance d'un dispositif ne mettant pas en œuvre ledit module administrateur ; et
- des moyens (150) pour ignorer toute commande d'accès au(x)dit(s) espace(s) mémoire privé(s), lorsque ladite commande est reçue en provenance d'un dispositif non identifié dans ladite table de gestion de droits d'accès.

2. Passerelle résidentielle selon la revendication 1, **caractérisée en ce que** la passerelle résidentielle est adaptée pour recevoir, via le réseau de communication local, lesdites commandes d'accès audit espace mémoire sous forme de messages de couche liaison.

3. Passerelle résidentielle selon la revendication 2, **caractérisée en ce que** la passerelle résidentielle est adaptée pour recevoir, via le réseau de communication local, lesdites commandes d'accès audit espace mémoire sous forme de messages selon le protocole AoE.

4. Passerelle résidentielle selon la revendication 3, **caractérisée en ce que** la passerelle résidentielle comporte des moyens pour ignorer toute commande de type « Mac Mask List » concernant le(s)dit(s) espace(s) mémoire privé(s).

5. Passerelle résidentielle selon l'une quelconque des revendications 1 à 4, **caractérisée en ce que** la passerelle résidentielle comporte un serveur (150) pour chaque espace mémoire privé, chaque serveur étant adapté pour filtrer et traiter les commandes d'accès audit espace mémoire privé, et des moyens pour diffuser un message de description de configuration de chaque serveur, ledit message incluant une description de l'espace mémoire privé géré par ledit serveur.

6. Passerelle résidentielle selon la revendication 5, **caractérisée en ce que**, l'espace mémoire comportant en outre au moins un espace mémoire public (131) non pris en compte par la table de gestion de droits d'accès, la passerelle résidentielle comporte un serveur (151) pour chaque espace mémoire public, la passerelle résidentielle comporte une file d'attente dans laquelle chaque serveur gérant un espace mémoire privé ou public place des commandes d'accès à l'espace mémoire à exécuter.

7. Passerelle résidentielle selon la revendication 6, **caractérisée en ce que** chaque serveur est associé avec un niveau de priorité et **en ce que** chaque commande d'accès à l'espace mémoire est placée dans la file d'attente en fonction du niveau de priorité associé au serveur fournissant ladite commande à exécuter.

8. Passerelle résidentielle selon l'une quelconque des revendications 1 à 7, **caractérisée en ce que**, lorsque la passerelle résidentielle n'est pas le dispositif implémentant le module administrateur, la passerelle résidentielle met en œuvre des moyens d'appairage de la passerelle résidentielle avec le dispositif implémentant le module administrateur.

9. Passerelle résidentielle selon l'une quelconque des revendications 1 à 8, **caractérisée en ce que** la passerelle comporte :
- des moyens de découverte de dispositifs connectés au réseau de communication local ;
- des moyens pour représenter les dispositifs découverts via une interface utilisateur ;
- des moyens pour permettre à un utilisateur de définir une association d'au moins un dispositif découvert avec chaque espace mémoire privé et avec des droits d'accès respectifs audit espace mémoire privé ; et
- des moyens pour générer au moins une commande administrateur pour mettre à jour la table de gestion de droits d'accès en fonction de l'association définie.

10. Procédé mis en œuvre par une passerelle résidentielle (110) connectée à un réseau de communication local (120), la passerelle résidentielle disposant d'un espace mémoire (132) mis à disposition d'au moins un dispositif connecté au réseau de communication local, **caractérisé en ce que**, ledit espace mémoire comportant au moins un espace mémoire privé (130), la passerelle résidentielle comportant une table de gestion de droits d'accès au(x)dit(s) espace(s) mémoire privé(s), la passerelle résidentielle effectue les étapes suivantes :
- recevoir (601) des commandes d'accès audit espace mémoire et des commandes administrateur de mise à jour de ladite table de gestion de droits d'accès ;
- mettre à jour (605) ladite table de gestion de droits d'accès, sur réception d'une commande administrateur en provenance d'un dispositif prédéterminé mettant en œuvre un module administrateur, et ignorer toute commande administrateur en provenance d'un dispositif ne mettant pas en œuvre ledit module administrateur ; et
- ignorer (608) toute commande d'accès au(x)dit(s) espace(s) mémoire privé(s), lorsque ladite commande est reçue en provenance d'un dispositif non identifié dans ladite table de gestion de droits d'accès.

## Patentansprüche

1. Residential Gateway (110), der dazu bestimmt ist, mit einem lokalen Kommunikationsnetzwerk (120) verbunden zu sein, wobei der Residential Gateway einen Speicherraum (132) aufweist, der dazu bestimmt ist, mindestens einer Vorrichtung (111; 112) zur Verfügung gestellt zu werden, die mit dem lokalen Kommunikationsnetzwerk verbunden ist, **dadurch gekennzeichnet, dass**, der Speicherraum umfassend mindestens einen privaten Speicherraum (130), der Residential Gateway Folgendes umfasst:
- eine Tabelle (140) zur Verwaltung von Zugriffsrechten auf den/die privaten Speicherraum/Speicherräume;
- Mittel zum Empfangen von Befehlen zum Zugriff auf den Speicherraum und von Administratorbefehlen zur Aktualisierung der Zugriffsrechte-Verwaltungstabelle;
- Mittel zum Aktualisieren der Zugriffsrechte-Verwaltungstabelle bei Empfang eines Administratorbefehls von einer vorbestimmten Vorrichtung, die ein Administratormodul umsetzt, und zum Ignorieren eines beliebigen Administratorbefehls von einer Vorrichtung, die das Administratormodul nicht umsetzt; und
- Mittel (150) zum Ignorieren eines beliebigen Befehls zum Zugriff auf den/die privaten Speicherraum/Speicherräume, wenn der Befehl von einer Vorrichtung empfangen wird, die nicht in der Zugriffsrechte-Verwaltungstabelle identifiziert ist.

2. Residential Gateway nach Anspruch 1, **dadurch gekennzeichnet, dass** der Residential Gateway geeignet ist, über das lokale Kommunikationsnetzwerk die Befehle zum Zugriff auf den Speicherraum in Form von Verbindungsschicht-Nachrichten zu empfangen.

3. Residential Gateway nach Anspruch 2, **dadurch gekennzeichnet, dass** der Residential Gateway geeignet ist, über das lokale Kommunikationsnetzwerk die Befehle zum Zugriff auf den Speicherraum in Form von Nachrichten gemäß dem AoE-Protokoll zu empfangen.

4. Residential Gateway nach Anspruch 3, **dadurch gekennzeichnet, dass** der Residential Gateway Mittel zum Ignorieren eines beliebigen Befehls des Typs "Mac Mask List" betreffend den/die privaten Speicherraum/Speicherräume umfasst.

5. Residential Gateway nach einem der Ansprüche 1 bis 4, **dadurch gekennzeichnet, dass** der Residential Gateway einen Server (150) für jeden privaten Speicherraum umfasst, wobei jeder Server geeignet ist, die Befehle zum Zugriff auf den privaten Speicherraum zu filtern und zu verarbeiten, und Mittel zum Verbreiten einer Nachricht zur Beschreibung einer Konfiguration jedes Servers, wobei die Nachricht eine Beschreibung des privaten Speicherraums enthält, der von dem Server verwaltet wird.

6. Residential Gateway nach Anspruch 5, **dadurch gekennzeichnet, dass** der Speicherraum ferner mindestens einen öffentlichen Speicherraum (131) umfasst, der von der Zugriffsrechte-Verwaltungstabelle nicht berücksichtigt wird, der Residential Gateway einen Server (151) für jeden öffentlichen Speicherraum umfasst, der Residential Gateway eine Warteschlange umfasst, in die jeder Server, der einen privaten oder öffentlichen Speicherraum verwaltet, auszuführende Befehle zum Zugriff auf den Speicherraum stellt.

7. Residential Gateway nach Anspruch 6, **dadurch gekennzeichnet, dass** jeder Server mit einer Prioritätsstufe verknüpft ist und dass jeder Befehl zum Zugriff auf den Speicherraum in Abhängigkeit von der Prioritätsstufe, die mit dem Server verknüpft ist, der die auszuführende Steuerung bereitstellt, in die Warteschlange gestellt wird.

8. Residential Gateway nach einem der Ansprüche 1 bis 7, **dadurch gekennzeichnet, dass**, wenn der Residential Gateway nicht die Vorrichtung ist, die das Administratormodul implementiert, der Residential Gateway Mittel zur Paarbildung des Residential Gateways mit der Vorrichtung, die das Administratormodul implementiert, einsetzt.

9. Residential Gateway nach einem der Ansprüche 1 bis 8, **dadurch gekennzeichnet, dass** der Gateway Folgendes umfasst:
- Mittel zur Erkennung von Vorrichtungen, die mit dem lokalen Kommunikationsnetzwerk verbunden sind;
- Mittel zur Darstellung der erkannten Vorrichtungen über eine Benutzerschnittstelle;
- Mittel, um es einem Benutzer zu gestatten, eine Verknüpfung mindestens einer erkannten Vorrichtung mit jedem privaten Speicherraum und mit jeweiligen Zugriffsrechten auf den privaten Speicherraum zu definieren; und
- Mittel zur Erzeugung mindestens eines Administratorbefehls zum Aktualisieren der Zugriffsrechte-Verwaltungstabelle in Abhängigkeit von der definierten Verknüpfung.

10. Verfahren, das von einem Residential Gateway (110) durchgeführt wird, der mit einem lokalen Kommunikationsnetzwerk (120) verbunden ist, wobei der Residential Gateway einen Speicherraum (132) aufweist, der mindestens einer Vorrichtung zur Verfügung gestellt ist, die mit dem lokalen Kommunikationsnetzwerk verbunden ist, **dadurch gekennzeichnet, dass**, der Speicherraum umfassend mindestens einen privaten Speicherraum (130), der Residential Gateway umfassend eine Tabelle zur Verwaltung von Zugriffsrechten auf den/die privaten Speicherraum/Speicherräume, der Residential Gateway die folgenden Schritte durchführt:
- Empfangen (601) von Befehlen zum Zugriff auf den Speicherraum und von Administratorbefehlen zur Aktualisierung der Zugriffsrechte-Verwaltungstabelle;
- Aktualisieren (605) der Zugriffsrechte-Verwaltungstabelle bei Empfang eines Administratorbefehls von einer vorbestimmten Vorrichtung, die ein Administratormodul umsetzt, und Ignorieren eines beliebigen Administratorbefehls von einer Vorrichtung, die das Administratormodul nicht implementiert; und
- Ignorieren (608) eines beliebigen Befehls zum Zugriff auf den/die privaten Speicherraum/Speicherräume, wenn der Befehl von einer Vorrichtung empfangen wird, die nicht in der Zugriffsrechte-Verwaltungstabelle identifiziert ist.

## Claims

1. Residential gateway (110) intended to be connected to a local area network (120), the residential gateway having a memory space (132) intended to be made available to at least one device (111; 112) connected to the local area network, **characterised in that**, said memory space comprising at least one private memory space (130), the residential gateway comprises:
- a table (140) managing rights of access to said private memory space or spaces;
- means for receiving commands for access to said memory space and administrator commands for updating said access rights management table;
- means for updating said access rights management table, on receipt of an administrator command coming from a predetermined device implementing an administrator module, and for ignoring any administrator command coming from a device not implementing said administrator module;
- means (150) for ignoring any command for access to said private memory space or spaces, when said command is received from a device not identified in said access rights management table.

2. Residential gateway according to claim 1, **characterised in that** the residential gateway is adapted for receiving, via the local area network, said commands for access to said memory space in the form of link layer messages.

3. Residential gateway according to claim 2, **characterised in that** the residential gateway is adapted for receiving, via the local area network, said commands for access to said memory space in the form of messages in accordance with the AoE protocol.

4. Residential gateway according to claim 3, **characterised in that** residential gateway comprises means for ignoring any command of the "MAC Mask List" type concerning said private memory space or spaces.

5. Residential gateway according to any one of claims 1 to 4, **characterised in that** the residential gateway comprises a server (150) for each private memory space, each server being adapted for filtering and processing the commands for access to said private memory space, and means for broadcasting a message describing the configuration of each server, said message including a description of the private memory space managed by said server.

6. Residential gateway according to claim 5, **characterised in that**, the memory space further comprising at least one public memory space (131) not taken into account by the access rights management table, the residential gateway comprises a server (151) for each public memory space, the residential gateway comprises a queue in which each server managing a private or public memory space places commands for access to the memory space to be executed.

7. Residential gateway according to claim 6, **characterised in that** each server is associated with a priority level and **in that** each command for access to the memory space is placed in the queue according to the priority level associated with the server supplying said command to be executed.

8. Residential gateway according to any one of claims 1 to 7, **characterised in that**, when the residential gateway is not the device implementing the administrator module, the residential gateway implements means for pairing the residential gateway with the device implementing the administrator module.

9. Residential gateway according to any one of claims 1 to 8, **characterised in that** the gateway comprises:
- means for discovering devices connected to the local area network;
- means for representing the discovered devices via a user interface;
- means for enabling a user to define an association of at least one discovered device with each private memory space and with respective rights of access to said private memory space; and
- means for generating at least one administrator command for updating the access rights management table according to the defined association.

10. Method implemented by a residential gateway (110) connected to a local area network (120), the residential gateway having a memory space (132) made available to at least one device connected to the local area network, **characterised in that**, said memory space comprising at least one private memory space (130), the residential gateway comprising a table for managing rights of access to said private memory space or spaces, the residential gateway performs the following steps:
- receiving (601) commands for access to said memory space and administrator commands for updating said access rights management table;
- updating (605) said access rights management table on reception of an administrator command coming from a predetermined device implementing an administrator module, and ignoring any administrative command coming from the device not implementing said administrator module; and
- ignoring (608) any command for access to said private memory space or spaces when said command is received from a device not identified in said access rights management table.
